Europäisches Patentamt

European Patent Office

Office européen des brevets

(19)

(11) Veröffentlichungsnummer : **0 098 434**
**B1**

(12) **EUROPÄISCHE PATENTSCHRIFT**

(45) Veröffentlichungstag der Patentschrift :
29.07.87

(21) Anmeldenummer : 83105960.5

(22) Anmeldetag : 18.06.83

(51) Int. Cl.⁴ : **B 29 D  9/00**

(54) **Verfahren zur Herstellung von mit Stahlcorden verstärkten Gummiartikeln.**

(30) Priorität : 02.07.82 DE 3224785

(43) Veröffentlichungstag der Anmeldung :
18.01.84 Patentblatt 84/03

(45) Bekanntmachung des Hinweises auf die Patenterteilung : 29.07.87 Patentblatt 87/31

(84) Benannte Vertragsstaaten :
**AT BE DE FR GB IT NL SE**

(56) Entgegenhaltungen :
**AT-B-   309 053**
**DE-A- 2 920 003**
**FR-A-   981 187**

(73) Patentinhaber : **BAYER AG**
**Konzernverwaltung RP Patentabteilung**
**D-5090 Leverkusen 1 Bayerwerk (DE)**

(72) Erfinder : **Mirza, Jean, Dr.**
**Wolfsheide 23**
**D-5068 Odenthal (DE)**

EP 0 098 434 B1

Jouve, 18, rue St-Denis, 75001 Paris, France

## Beschreibung

Viele technische Gummiartikel, beispielsweise Förderbänder oder Hochdruckschläuche sind mit verstärkenden Einlagen aus hochkohlenstoffhaltigem Stahl, der häufig in Form von Stahlcorden verwendet wird, ausgestattet.

Um eine gute Leistungsfähigkeit und Lebensdauer der Gegenstände zu gewährleisten, ist eine starke und dauerhafte Bindung zwischen Metall und Gummi erforderlich.

Diese läßt sich ohne weiteres nur erzielen, wenn die Filamente des Stahlcordes mit einer dünnen Schicht aus $\alpha$-Messing oder einer anderen Legierung mit den Hauptbestandteilen Kupfer und Zink oder mit reinem Zink plattiert sind.

Der so ausgerüstete Cord wird direkt in die in der Regel besonders haftfördernde Zusätze enthaltene Gummimischung einvulkanisiert.

Aus der DE-A-29 20 003 ist ein Verfahren zur Herstellung von verstärkten Gummiartikeln aus einem vermessingten oder mit einer anderen Legierung beschichteten Stahlcord und einem mit Schwefel vernetzbaren Kautschuk bekannt, gemäß dem Oberbegriff aus Anspruch 1, wobei der Metallcord mit einer Schwefel enthaltenden Kautschukmischung umhüllt wird und anschließend die Vulkanisation vorgenommen wird.

Aus der AT-B-264 122 ist ein Verfahren zur Herstellung von Verbundkörpern aus mindestens zwei voneinander verschiedenen Teilen bzw. Schichten natürlicher oder synthetischer Kautschukpolymeren bekannt, wobei die Kautschukpolymeren bezüglich des Vernetzungsbeginns und der Vernetzungsdauer ganz oder mindestens weitgehend miteinander übereinstimmen und mindestens eines der beiden Vernetzungsmittel in dem anderen, durch das andere Vernetzungsmittel vernetzenden Kautschukpolymeren eine wenn auch beschränkte Vernetzungswirkung besitzt.

Die Haftung zwischen vermessingtem Stahlcord und dem Kautschuk entsteht normalerweise über den Schwefel, der in dem zu vulkanisierenden Kautschuk als Vulkanisationsmittel anwesend ist. Dieser Schwefel reagiert unter Vulkanisationsbedingungen auch mit der Messing- oder Legierungsschicht unter Bildung von Kupfer- und/oder Zinksulfiden und verursacht auf diese Weise eine Haftung des Stahlcordes an dem vernetzten Kautschuk.

Setzt man nun mit Peroxiden vernetzbare Kautschuke ein, versagt das geschilderte Haftverfahren, da Schwefel als Haftmittel nicht zur Verfügung steht. Ebenfalls ist es nicht möglich, Schwefel als Mischungskomponente dem peroxidisch vernetzbaren Kautschuken zuzugeben, da unerwünschte Reaktionen zwischen Schwefel und den Peroxiden eintreten, die zu einer erheblichen Störung der Vernetzung des Kautschuks führen.

Es besteht ein Bedürfnis in der Technik, peroxidisch vernetzbare Kautschuke mit verstärkenden Stahleinlagen zu versehen, wobei eine gute Haftung zwischen Stahl und Kautschuk vorhanden sein muß.

Das bestehende Bedürfnis kann durch folgende erfindungsgemäße Lehre befriedigt werden :

Die Tatsache, daß Schwefel die peroxidische Vernetzung erheblich stört, führt zu der Folgerung, daß Schwefel und Peroxide gemeinsam in einer Kautschukmischung nicht vorliegen dürfen. Es ist daher notwendig, Schwefel und Peroxide in zwei getrennten Mischungen einzusetzen, damit sie bei Vulkanisationstemperatur ohne gegenseitige Störung jeweils reagieren können.

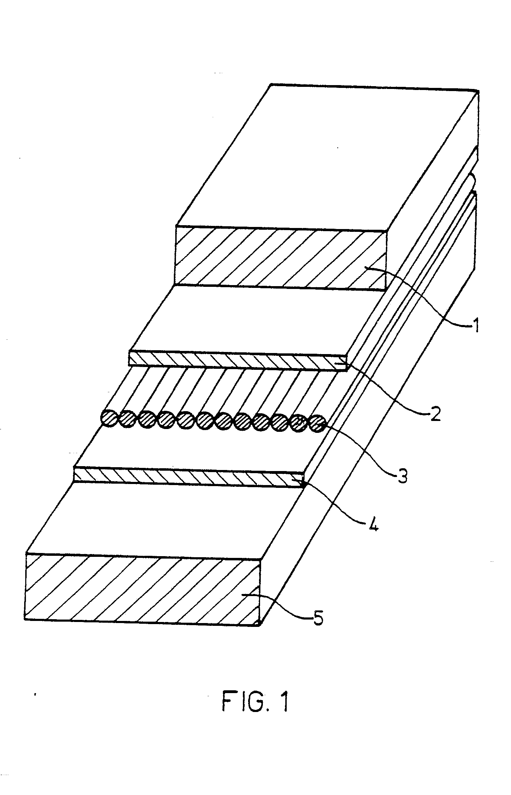

Ein mit Stahlcord verstärkter Kautschuk ist in Figur 1 abgebildet. Dieser besteht aus einer äußeren Hülle (1) und (5) der Kautschukmischung A, die peroxidisch vernetzt wird, und einer darunterliegenden Schicht (2) und (4) der Kautschukmischung B, die Schwefel enthält und die Haftung an dem vermessingten oder anders legierten Stahlcord (3) durch Reaktion des Schwefels mit Messing oder der Legierung herbeiführt.

Die Vernetzung in den Schichten A und B wird dadurch erreicht, daß das Peroxid aus der Mischung A in die Mischung B migriert und in beiden Mischungen somit eine peroxidische Vernetzung stattfindet.

Damit das skizzierte Schema funktioniert, sollten folgende Bedingungen eingehalten werden :

a) Wahl eines im Polymeren zumindest teilweise löslichen Peroxids (oder Peroxidsystems), dessen Zersetzungstemperatur oberhalb der Temperatur liegt, bei der Schwefel mit Messing reagiert. Damit wird erreicht, daß die Vernetzung der Mischung A erst eintritt, nachdem die Haftung zwischen Mischung B und dem Stahlcord bereits entstanden ist.

b) Richtige Dosierung des Schwefels, der im Überschuß eine nachträgliche Vernetzung der Mischung B verhindern würde.

c) Richtige Dosierung des Peroxids, um die Mischung B ausreichend zu vernetzen.

d) Einstellung der Mischung B in einer ausreichend dünnen Schicht (entweder als Folie oder als Lösung), um eine optimale Durchdringung des Peroxids zu ermöglichen und eine gleichmäßige Vernetzung der gesamten Schichtdicke zu gewährleisten.

Gegenstand der Erfindung ist somit ein Verfahren zur Herstellung von verstärkten Gummiartikeln aus einem vermessingten oder mit einer anderen Legierungsschicht überzogenen Stahlcord und einem vernetzbaren Kautschuk, dadurch gekennzeichnet, daß der Kautschuk peroxidisch vernetzt wird, wobei der Stahlcord mit einer Kautschukmischung B umhüllt wird, die 0,5-10 Gew.-Teile Schwefel, bezogen auf 100 Gew.-Teile Kautschuk in der Kautschukmischung B, enthält und eine Schichtdicke ≤ 3 mm besitzt, anschließend auf die Kautschukmischung B eine Kautschukmischung A aufgetragen wird, die 1 bis 15 Gew.-Teile eines Peroxids, bezogen auf 100 Gew.-Teile Kautschuk in der Kautschukmischung A, mit einem Zersetzungspunkt oberhalb 130 °C enthält, und die Schichten gemeinsam bei Temperaturen über 130 bis 220 °C vulkanisiert werden.

Der eingesetzte Stahlcord besitzt den handelsüblichen Durchmesser. Er kann je nach Einsatzgebiet einzeln oder gebündelt eingesetzt werden. Die bevorzugte Legierung ist Messing.

Die Kautschukmischung B enthält bevorzugt folgende Polymere : Butadienkautschuk, chloriertes Polyethylen, chlorsulfoniertes Polyethylen, Ethylen-Propylen-Dienpolymerisat, Ethylen-Propylen-Bipolymerisat, Ethylenvinylacetat, Fluorkohlenstoffpolymerisate, Isoprenkautschuk, Acrylnitril-Butadien-Copolymerisat, das voll oder teilweise hydriert oder carboxyliert sein kann, Naturkautschuk, Silikonkautschuk, Styrol-Butadien-Kautschuk, der auch carboxyliert sein kann, sowie ein Terpolymer aus Vinylacetat, Butylacrylat und Acrylnitril.

Die Kautschuke sind peroxidisch vernetzbar. Bevorzugt genannt ist chloriertes Polyethylen.

Die Kautschuke können weiterhin die üblichen Hilfsstoffe enthalten, sofern diese die Reaktion des Schwefels mit der Oberfläche des Stahlcordes nicht verhindern und weiterhin die Peroxidvernetzung des Kautschuks nicht stören. Beispielsweise genannt seien Stabilisatoren wie MgO ; Füllstoffe wie Ruß, Kreide und/oder Weichmacher.

Die Menge Schwefel, bezogen auf 100 Gew.-Teile des Kautschuks in der Kautschukmischung B beträgt bevorzugt 3-6, insbesondere 4-5 Gew.-Teile.

Die Schichtdicke der Kautschukmischung B auf dem Stahlcord beträgt bevorzugt 0,01-2 mm, insbesondere 0,5-1 mm.

Die Kautschukmischung B wird in dem Fachmann bekannter Weise auf den Stahlcord aufgetragen. Beispielsweise kann der Stahlcord durch ein Tauchbad von B geführt werden oder der Stahlcord wird mit Streifen der Kautschukmischung B umwickelt oder im Extruder umspritzt.

Die Kautschukmischung A kann aus den gleichen Polymeren, wie sie für die Kautschukmischung B angegeben sind, bestehen.

Das bedeutet aber nicht, daß die Kautschukmischungen A und B immer identische Polymere aufweisen, diese können durchaus unterschiedlich sein. So kann beispielsweise die Mischung A und B aus jeweils chloriertem Polyethylen als Polymer bestehen. Mischung B könnte jedoch beispielsweise auch aus chloriertem Polyethylen und Mischung A aus EPDM-Kautschuk bestehen. Bevorzugter Kautschuk der Kautschukmischung A ist chloriertes Polyethylen.

Die Kautschukmischung A kann weiterhin Hilfsstoffe enthalten, die keine Verhinderung der Peroxidvernetzung bewirken. Beispielsweise seien genannt : Füllstoffe wie Ruß oder Kreide ; Stabilisatoren wie MgO oder Bleioxid und/oder Weichmacher.

Beispiele für die in der Kautschukmischung A verwendeten Peroxide sind 1,1-bis(tert.-butyloxi)-3,3,5-trimethylcyclohexan, t-Butylperbenzoat, 3,3-bis-(t-Butylperoxi)butancarbonsäure-n-butylester, Dicumylperoxid, 1,3-bis-(t-Butylperoxiisopropyl)-benzol.

Weiterhin können in üblichen Mengen den Peroxiden oder der Peroxidmischung Aktivatoren wie Triallylcyanurat oder Triallylisocyanurat zugesetzt werden.

Die Mengen an Peroxid in der Kautschukmischung A betragen bevorzugt pro 100 Gew.-Teile Kautschuk 3-10, insbesondere 5-8 Gew.-Teile.

Die Kautschukmischung A wird auf die Kautschukmischung B in üblicher Weise aufgetragen, beispielsweise durch Umwickeln oder Umspritzen.

Die Vulkanisation erfolgt unter Druck unter Anwendung der üblichen Vulkanisationsmethoden, beispielsweise Dampf, Heizluft, Pressen in den üblichen Maschinen.

Die angewandte Vulkanisationstemperatur beträgt bevorzugt 150-190 °C.

Das nach dem erfindungsgemäßen Verfahren erhaltene Erzeugnis kann beispielsweise eingesetzt werden als Förderband, Schlauch für z. B. Mittel-, Hoch- oder Höchstdruck, Keilriemen, Zahnriemen, Treibriemen oder Puffer.

Beispiele

Zusammenfassung

Die Versuche zeigen, daß die mit Schwefel erzielten Haftwerte weit höher liegen als z. B. das für die Herstellung von Hochdruckschläuchen nach DIN 20022 geforderte Niveau. Sie zeigen ferner, daß die Haftung nach Hitzealterung und nach dynamischer Beanspruchung besser ist als die eigentliche Einreißfestigkeit des Gummis (nach der Haftprüfung ist die Cordoberfläche mit Gummi bedeckt). Das günstige Rißbild ist auf die « stabilisierende » Wirkung von Schwefel zurückzuführen, das durch die chemische Bindung zu Messing den negativen Einfluß von Zink auf die Alterungsbeständigkeit von chlorierten Polyethylen-Mischungen herabsetzt.

Mischungsaufbau

Die für die Herstellung der Prüfkörper verwendeten Mischungen A und B sind in Tabelle 1 angeführt. Als Stabilisator wurde in Mischung B Magnesiumoxid eingesetzt (anstatt des in Mischung A verwendeten basischen Bleisilikats), um die gewünschte Reaktion zwischen Schwefel und Messing, die zur Haftung führt, nicht zu stören.

Prüfkörperaufbau

Auf einer Aufbautrommel wurde Mischung A als Folie in einer Gesamtfellstärke von 3 mm aufgewickelt. Darauf wurde der vermessingte Stahlcord (7 × 3 × 0,15) eng anliegend aufgewickelt, nachdem er durch eine vorgelagerte Lösungswanne gezogen wurde, in der sich die Lösung von Mischung B befand (Lösungsmittel Perchlorethylen oder ein Gemisch aus Toluol : Benzin 1 : 1 ; Lösungsverhältnis 1 Gew.-Teil Mischung : 5 Gew.-Teile Lösungsmittel).

Nach dem Verdampfen des Lösungsmittels wurden 3 siliconisierte Papierstreifen in die Achsrichtung der Trommel gelegt und anschließend mit Mischung A (Gesamtstärke 3 mm) abgedeckt.

Nach dem Bandagieren der Aufbautrommel mit feuchtem Wickel aus Baumwolle wurde in Dampf (30 min/160 °C) vulkanisiert.

Aus dem vulkanisierten « Zylinder » wurden Prüfkörper folgender Dimensionen ausgestanzt :
150 mm × 25 mm (Prüfung der Trennfestigkeit nach statischer Lagerung)
300 mm × 25 mm (Prüfung der Trennfestigkeit nach dynamischer Ermüdung)

Prüfung

Um eine möglichst vollständige Aussage über die Eignung der erzielten Gummimetallbindung für die Praxis zu erhalten, wurde die Haftung an Prüfkörpern vor und nach Hitzealterung bzw. nach Hitzealterung und anschließender dynamischer Ermüdung geprüft.

Die Prüfung der Trennfestigkeit (nach dem Schältest) wurde in Anlehnung an DIN 53530 durchgeführt. Zur Prüfung wurden ungealterte und gealterte Prüfkörper (24 h und 168 h/150 °C) verwendet.

Die dynamische Ermüdung erfolgte in Anlehnung an ASTM D-430-59 (73), Methode A (Scott Flexing Maschine). Nach dieser Methode sollte versucht werden, die Beanspruchung des verstärkten Schlauches im Pulstest zu simulieren, um einen Hinweis über die Eignung der Gummimetallhaftung im praktischen Einsatz zu erhalten.

Hierfür wurden Prüfkörper verwendet (300 × 25 mm), die an beiden Enden siliconisierte Papierstreifen zwischen Mischung B und Cord enthalten. Die Prüfkörper wurden in der Prüfvorrichtung an beiden Enden eingespannt, so daß nur der mittlere Bereich (beanspruchte Probenlänge 130 mm) dynamisch belastet wurde. Durch Kennzeichnung des dynamisch belasteten Bereichs lassen sich die ermittelten Trennfestigkeitswerte den unterschiedlich belasteten Bereichen eindeutig zuordnen.

Ergebnisse

Haftung vor bzw. nach statischer Alterung (Tabelle 2).
Die mit 90 N/cm gemessene Trennfestigkeit ist weit höher als der nach DIN 20022 für Hochdruckschläuche geforderte Minimalwert (Decke : 40 N/cm ; Seele : 25 N/cm).
Nach Alterung (7d/150 °C) bleibt die Gummimetallhaftung bei einer Trennfestigkeit von 46 N/cm höher als die Weiterreißfestigkeit des Gummis.
Haftung vor und nach dynamischer Ermüdung (Tabelle 3).
Die Ergebnisse der Trennfestigkeit nach Hitzealterung sind mit denen der Tabelle 2 vergleichbar.
Das Rißbild nach der dynamischen Ermüdung zeigt, daß die Stahlcordoberfläche nach 1 470 000 Biegungen mit Gummi bedeckt ist und läßt keine frühzeitige Alterung durch das Zink im Messing an der unmittelbar an Messing angrenzenden Gummischicht erkennen.

(Siehe Tabelle 1 Seite 5 ff.)

4

## Tabelle 1

### Haftung von chloriertem Polyethylen auf vermessingtem Stahlcord

| Kautschuk-Mischung | A | B |
|---|---|---|
| chloriertes Polyethylen (Bayer CM 3630) | 100.0 | 100 |
| Magnesiumoxid | – | 10.0 |
| basisches Bleisilikat | 10.0 | – |
| Alterungsschutzmittel (Vulkanox HS) | 0.2 | 0.2 |
| Ruß N 762 | 60.0 | 60.0 |
| Weichmacher (Reomol LTM) | 20.0 | 20.0 |
| Trialkylcyanurat (TAC) | 4.0 | 4.0 |
| 3,3-Bis-(tert.-butylperoxi)butancarbonsäure-n-butylester (Trigonox 17/40) | 7.0 | – |
| Schwefel | – | 4.0 |
| | 201.2 | 198.2 |
| Kneter-Batchtemperatur | 125°C | 125°C |

Tabelle 1 (Fortsetzung)

| Kautschuk-Mischung | | A | B |
|---|---|---|---|
| **Vulkanisateigenschaften, Normring I** | | | |
| F (MPa), 160°C | 30' | 16.9 | 5.8 |
| D (%), 160°C | 30' | 395 | 990 |
| S100 (MPa), 160°C | 30' | 3.2 | 1.5 |
| S300 (MPa), 160°C | 30' | 14.2 | 3.3 |
| H (Shore A) 160°C | 30' | 67 | 65 |
| R (%), 160°C | 30' | 29 | 27 |
| **Vulkanisateigenschaften, Normstab II** | | | |
| F (MPa), 160°C | 30' | 18.4 | 7.9 |
| D (%), 160°C | 30' | 375 | 890 |
| S100 (MPa), 160°C | 30' | 3.4 | 1.8 |
| S300 (MPa), 160°C | 30' | 15.2 | 3.8 |
| Dichte (g/cm$^3$) | | 1.36 | 1.35 |

A

B

Mischungsherstellung im Innenmischer GK 5, 32 Upm, 60 °C, 70 % Füllung des mit Weizen ermittelten Knetervolumens Upside-down-Mischverfahren

| Mischfolge | Mischfolge |
|---|---|
| O' Ruß N-762, Bleisilikat Vulkanox HS, Weichmacher, Bayer CM 3630 | O' Ruß N-762, Magnesium- oxid, Vulkanox HS, Weichmacher, TAC, Bayer CM 3630 |
| 1 1/2' TAC, Trigonox 17/40 2' leeren | 1 1/2' leeren |

Kneter-Batchtemperatur

| 125 °C | 125 °C |
|---|---|
| Homogenisieren : Walze 60 °C | Fertigmischen : Walze 60 °C |
| O' Fertige Mischung 1/2' Verarbeitung 3' Ende der Verarbeitung | O' Batch 1/2' Schwefel 2' Verarbeitung 4' Ende der Verarbeitung |

Tabelle 2

Statische Haftung (N/20 mm) bzw. Resthaftung (in %) nach Hitzealterung

| O-Wert | 225[+)] | (100 %) |
|---|---|---|
| nach 24 h/150°C | 135[+)] | (60 %) |
| nach 168 h/150°C | 115[+)] | (61 %) |

+) Strukturriß im Gummi

# 0 098 434

## Tabelle 3

Haftung (N/25 mm) bzw. Resthaftung (in %) nach Riemenbiege-Ermüdung [++]

| O-Wert | nach dynamischer Ermüdung |
|---|---|
| 220 | 215 (98 %) nach 24 h/RT (ca. 245.000 Hübe) |
| 235 | 230 (98 %) nach 72 h/RT (ca. 735.000 Hübe) |
| O-Wert (nach 72 h/ 140 °C) | ... anschließender dynamischer Ermüdung |
| 130 | 120 (92 %) nach 24 h/RT (ca. 245.000 Hübe) |
| 132 | 120 (91 %) nach 72 h/RT /ca. 735.000 Hübe) |

[++] Riemenbiege-Ermüdung in Anlehnung an ASTM D-430-59 (73)

Prüfkörper : Anzahl der Biegungen bis zur Lagentrennung

| | |
|---|---:|
| Prüfbedingungen : Kraft K (N) | 333 |
| Umlenkrollen-$\varnothing$ d (mm) | 30 |
| Hubfrequenz n (1/min) | |
| (1 Hub : 2 Biegungen) | 170 |
| Beanspruchte Probenlänge 1E (mm) | 130 |
| Probe : Breite b (mm) | 25 |
| Probe : Dicke h (mm) | 7 |
| | (gesamt mit Stahlcordeinlage) |
| Probe : Länge 1 (mm) | 300 |

Erklärungen

F = Festigkeit (MPa) nach DIN 53504
D = Bruchdehnung (%) nach DIN 53504
S = Spannung (MPa) nach DIN 53504
H = Härte (Shore A) nach DIN 53505
R = Stoßelastizität (%) nach DIN 53512

**Patentanspruch**

Verfahren zur Herstellung von verstärkten Gummiartikeln aus einem vermessingten oder mit einer anderen Legierungsschicht überzogenen Stahlcord (3) und einem vernetztbaren Kautschuk dadurch gekennzeichnet, daß der Kautschuk peroxidisch vernetzt wird, wobei der Stahlcord (3) mit einer Kautschukmischung B (2, 4) umhüllt wird, die 0,5 bis 10 Gew.-Teile Schwefel, bezogen auf 100 Gew.-Teile Kautschuk in der Kautschukmischung B (2, 4), enthält und eine Schichtdicke ≤ 3 mm besitzt, anschließend auf die Kautschukmischung B (2, 4) eine Kautschukmischung A (1, 5) aufgetragen wird, die 1 bis 15 Gew.-Teile eines Peroxids bezogen auf 100 Gew.-Teile Kautschuk in der Kautschukmischung A (1, 5), mit einer Zersetzungstemperatur oberhalb 130 °C enthält, und die Schichten gemeinsam bei Temperaturen über 130 bis 200 °C vulkanisiert werden.

**Claim**

Process for the production of reinforced rubber articles from a steel cord, which is brass-plated or coated with a different alloy layer, and a peroxidically cross-linked rubber, characterised in that the steel cord is sheathed with a rubber mixture B (2, 4) which contains 0.5 to 10 parts by weight of sulphur, based on 100 parts by weight of rubber in the rubber mixture B (2, 4), and has a layer thickness of ≤ 3 mm, then a rubber mixture A (1, 5), which contains 1 to 15 parts by weight of a peroxide, based on 100 parts by weight of rubber in the rubber mixture A (1, 5), with a decomposition temperature of higher than 130 °C, is applied to the rubber mixture B (2, 4), and the layers are vulcanised together at temperatures of above 130 to 200 °C.

7

**0 098 434**

**Revendication**

Procédé pour fabriquer des articles en caoutchouc renforcés, à partir d'un câblé d'acier revêtu de laiton ou d'une couche d'un autre alliage et d'un caoutchouc réticulé à l'aide d'un peroxyde, procédé caractérisé en ce que le câblé d'acier est entouré d'un mélange B de caoutchouc (2, 4), qui contient 0,5 à 10 parties en poids de soufre, sur la base de 100 parties en poids de caoutchouc du mélange B de caoutchouc (2, 4) et présente une épaisseur de couche inférieure ou égale à 3 mm, puis l'on applique un mélange A de caoutchouc (1, 5) qui contient 1 à 15 parties en poids d'un peroxyde, sur la base de 100 parties en poids de caoutchouc du mélange A de caoutchouc (1, 5), ayant une température de décomposition supérieure à 130 °C, et l'on vulcanise les couches ensemble à des températures allant de plus de 130 à 200 °C.

FIG. 1